Europäisches Patentamt

European Patent Office

Office européen des brevets

(11) Publication number: **0 017 482**
A1

## EUROPEAN PATENT APPLICATION

(21) Application number: 80301058.6

(22) Date of filing: 02.04.80

(51) Int. Cl.³: **B 60 K 31/00**
**G 05 D 13/04**

(30) Priority: 04.04.79 GB 7911813
09.10.79 GB 7935012

(43) Date of publication of application:
15.10.80 Bulletin 80/21

(84) Designated Contracting States:
BE DE FR IT LU NL SE

(71) Applicant: ASSOCIATED ENGINEERING LIMITED
Ince House 60 Kenilworth Road
Leamington Spa Warwickshire(GB)

(72) Inventor: Hunt, Norman
Ince House 60 Kenilworth Road
Leamington Spa CV32 6JZ Warwickshire(GB)

(74) Representative: WARREN, Stanley Francis et al,
Baron & Warren 16, Kensington Square
London W8 5HL(GB)

(54) Vehicle speed-control system.

(57) The invention relates to a motor vehicle speed control system including an engine throttle actuator device (30) comprising a bellows (23) in which the pressure is adjusted, while the system is engaged, by an electromagnetic valve (C) pulsed by signals from an electronic speed detector to control orifices (17,16) connected to atmosphere and vacuum respectively. A second electromagnetic valve (B) is biassed by spring (9) when de-energized to open orifice (10) to atmosphere rapidly to vent the bellows when the system is disengaged. An additional safety means is provided by a valve (32) which is operated by brake pedal (31) and, when opened, will rapidly vent the bellows (23) through pipe (38) and orifice (39) if valve (B) malfunctions. Resonator (R) produces an audible warning signal when air flows therethrough. The audible warning system may be used for other applications.

./...

Fig.1

-1-

## VEHICLE SPEED-CONTROL SYSTEM

This invention relates to a vehicle driven by an internal combustion engine, and more particularly, to a speed control system whereby the vehicle speed may be maintained substantially constant at a desired or selected speed. It also relates to an audible warning system which produces a signal indicating malfunction of an operating condition of the speed control system or of some other component of the vehicle or the engine.

Examples of such speed control systems are described in British Patents Nos. 1386961 and 1486821. The specification of DT-OS 2819694 describes such a speed control system having a pneumatic actuator, specifically a vacuum actuator, comprising a bellows chamber having a movable wall connected to actuate the engine speed control, e.g. throttle or fuel injection pump, the pressure in the bellows being normally controlled, while the speed control system is engaged and operative, by a first electromagnetic control valve which operates in response to signals from an electronic control circuit which detects the vehicle speed. A second electromagnetic control valve is spring-biassed to open the bellows to atmosphere when the speed control system is disengaged or in the event of the first electromagnetic valve failing to operate correctly, whereby to allow rapid venting of the bellows to atmosphere and thus rapidly to restore the throttle or the like to its closed or off position.

Circumstances can arise in which the second electromagnetic control valve of the actuator device could fail to operate properly, for example due to this control valve failing to de-energize or sticking with its vent closed, which would inhibit rapid throttle closure upon the speed control system being disengaged, with consequent increased risk of an accident occurring.

An object of the invention is to provide additional safety means which can be rapidly brought into operation

-2-

to reduce the risk of accident in the event of such failure and which provides an additional safeguard during normal driving. To this end the invention provides an auxiliary driver-controlled valve (herein referred to as an "auxiliary dump valve") which, when opened, will rapidly vent the actuator to atmosphere in the event of the second electromagnetic control valve failing to open its vent to atmosphere.

According to the invention a motor vehicle speed-control system for maintaining the vehicle speed substantially constant, comprising an electronic control circuit operable to sense the speed of the vehicle and produce a pulsed output of which the mark-to-space ratio of the pulses varies in dependence upon a comparison between the actual vehicle speed and a selected vehicle speed, an engine speed control adjustable by an actuator device including a chamber having a movable wall connected to said engine speed control, the chamber wall being movable by changing the pressure of the gas in the chamber under control of two electromagnetic valves, the first electromagnetic valve being energized by said electrical pulses to connect the chamber to first and second sources of gas pressure in accordance with the mark-to-space ratio of the pulses, and the second electromagnetic valve being spring biassed so that, when de-energized, its valve moves to a first position in which it opens a connection between the chamber and said first pressure source and, when energized, the valve moves to a second position in which it closes said connection, the actuator device adjusting the engine speed-control to reduce the engine speed as the gas pressure in the chamber approaches said first pressure, is characterized by an auxiliary dump valve which is normally closed and is opened by actuation of the vehicle brake pedal or other driver-actuable member to connect said first pressure source to said chamber through a further connection

-3-

which is closed by said second electromagnetic valve when in its said first position and is opened when said second electromagnetic valve is in its said second position, the gas flow between the chamber and said first pressure source, when both the auxiliary dump valve and said further connection are open, being at a rate sufficient to cause the pressure in the chamber rapidly to approximate to and to be maintained approximately at said first pressure irrespective of the action of said first electromagnetic valve.

Since it is natural for a driver to actuate the vehicle brakes in the event of an emergency, usually by depressing the brake pedal, this auxiliary dump valve is preferably opened by actuation of a brake operating member.

A further object of the invention is to provide a simple and inexpensive system for producing an audible signal in the event of a malfunction of the actuator device necessitating actuation of the auxiliary dump valve to vent the actuator to atmosphere. To this end, the audible signal is produced by causing the consequent flow of gas through the auxiliary dump valve to flow through a sound-producing device, known per se, such as a resonator or reed device. Such an audible device, which may conveniently be connected in the conduit between the auxiliary dump valve and the actuator device, will produce an auxible warning signal by the flow of venting air therethrough in the event of malfunctioning of the second electromagnetic control valve.

The novel audible warning system of this invention may also be used for producing an audible signal in response to the occurrence of a particular operating condition of other components of the engine or vehicle. Thus, the valve controlling the opening of the flow path may comprise a float valve in a reservoir for fuel, brake fluid or clutch fluid which opens the inlet of the audible warning device (if its outlet is connected to the engine intake manifold) to the atmosphere when the fluid level falls below a predetermined height. Or the valve may be actuated by a float in the engine radiator or oil sump, where it is desired to provide a warning when the cooling fluid or oil falls below a predetermined level. In modifications the valve may be opened when the pressure in the oil circulating system falls below a predetermined value, or when the cooling water temperature or road speed exceeds a predetermined value. When used for indicating pressure variations, the valve may consist of a spring-loaded plunger on the face of which the pressure acts; for road speed detection a magnetic drag cup system may be used to actuate the valve; for temperature detection the operating force may be provided by a wax-filled capsule.

In each case, when the value of the variable transgresses the pre-set limit, a conduit is opened by the valve, which is conveniently located at the free end of the conduit, and a gas flow (normally air) passes through the conduit and the audible warning device to provide an audible signal.

The audible device conveniently comprises a known resonator or reed device in a housing which is closed except for an inlet and an outlet. The outlet may be connected to a source of suction, such as the engine intake manifold, and the inlet be openable to the atmosphere by the control valve means which is conveniently located at the free end of a pipe leading from the audible device inlet and positioned where the operating condition is to be detected. Or the differential gas pressure may alternatively be between a zone at superatmospheric pressure, such as the pressure in an engine supercharger, and a zone at atmosphere pressure or vacuum.

A further object of the invention is therefore to provide a simple and inexpensive system for producing an audible signal when a particular operating condition (e.g. transgression of a threshold or malfunctioning) of the engine or some other component of the vehicle arises. To this end, the audible signal is produced by flow of gas through a device, known per se, having an inlet and an outlet for the flow of gas therethrough, said inlet and outlet being connected respectively to a first zone of gas at a first pressure and a second zone of gas at a lower pressure, the gas flow path through said device from said first zone to said second zone including valve means which is normally closed and opens in response to the existence of said operating condition to be indicated.

The invention will now be further described by way of example, with reference to the accompanying drawings, in which:-

Fig. 1 is a diagrammatic representation of a vehicle speed control system according to one embodiment of the invention,

Fig. 2 is a cross-section through one embodiment of a suitable audible signal producing device, known per se, and

Fig. 3 is a diagrammatic representation of an audible warning system for indicating low brake fluid level.

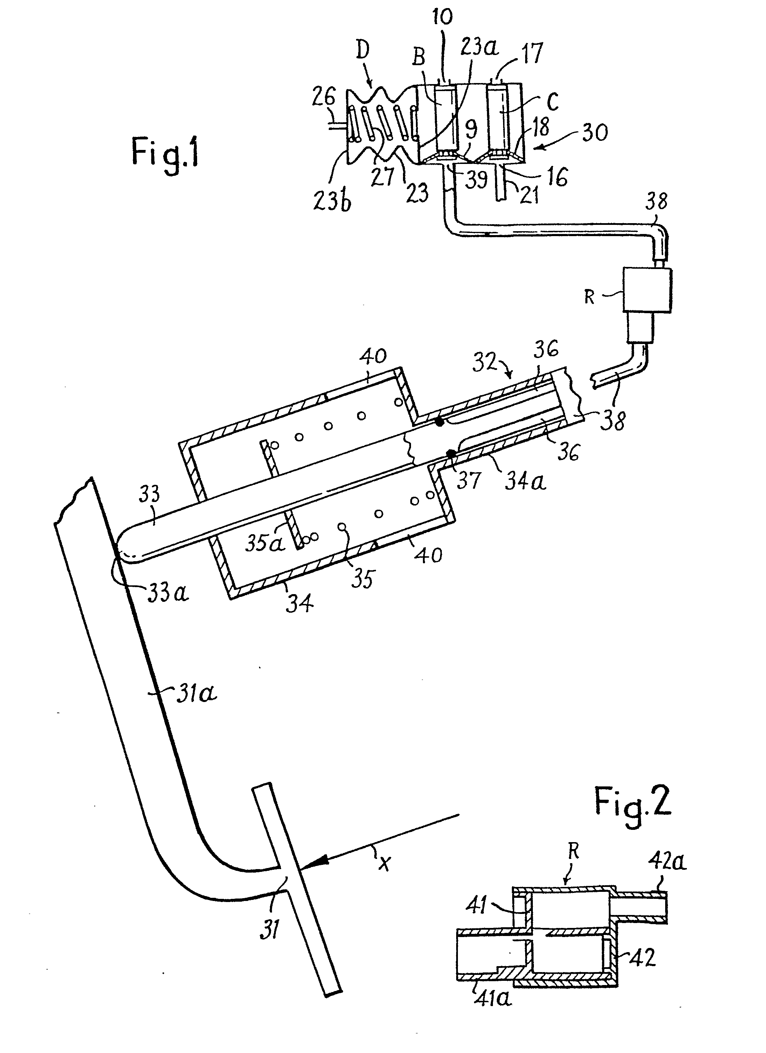

Fig. 1 of the drawings shows an embodiment of the invention applied to a speed-control system, such as described in British Patent Specification Nos. 1386961 and 1486821, for maintaining a vehicle at a predetermined substantially constant speed. The drawing shows at 30 the actuator device which forms part of the system. The actuator device may be constructed as more fully described in German Specification (Offenlegungschrift) 28 19 694 and for ease of understanding the parts of the actuator device shown have been given the same reference numbers as in the aforementioned German specification.

-6-

Briefly and by way of example, when in use, the actuator device 30 is connected to the carburettor throttle valve, fuel injection pump rack, or other engine speed control associated with the inlet manifold of an internal combustion engine of a road or other vehicle (not shown). The actuator device 30 controls the opening and closing of the throttle valve in dependence upon signals from an electronic control circuit (also not shown) of the speed-responsive system, which detects various operating parameters or conditions of the engine and/or vehicle. The actuator device basically includes a chamber containing two electromagnetic control valves B and C, the chamber being connected to a bellows device D whose movement is employed to control, e.g. the throttle valve. Valve C controls orifices 16 and 17 and valve B controls orifice 10. A pipe 21 connects orifice 16 to a sub-atmospheric pressure source such as the inlet manifold of the internal combustion engine. Orifices 10 and 17 are connected to atmosphere. Orifice 10 is larger than orifice 17 and, when open, rapidly vents the bellows to atmosphere. The bellows 23 has a relatively fixed wall 23a, and a relatively movable wall 23b which is connected through a wire 26, or similar linkage, to control the throttle valve. The spring 27 within the bellows urges the walls 23a and 23b away from each other.

The brake pedal of a vehicle fitted with a speed control arrangement incorporating such an actuator device is shown at 31 and an auxiliary dump valve 32 is mounted adjacent to the brake pedal and has one end 33a of its operating rod 33 bearing on the arm 31a of the brake pedal. The operating rod passes through the housing 34 of the control valve and is surrounded by a spring 35 extending between one end of the housing and an abutment 35a on the operating rod, such that when the brake pedal is depressed in the direction of the arrow X to apply the vehicle brakes, the spring urges the operating rod to the left as viewed in Fig. 1. The other end of the operating rod can slide in a tubular end 34a of the housing 34 and carries longitudinal grooves or flutes 36 and, in cooperation with a sealing ring 37, forms a valve member. The tubular end 34a is connected by means of a pipe 38 to an orifice 39 controlled by the electromagnetic control valve B and located at its end opposite to that adjacent the orifice 10 leading to atmosphere. The housing 34 of the control valve is provided with apertures 40 to allow atmospheric air to enter the housing and as soon as the control rod 33 moves to the left upon operation of the brake pedal, the sealing ring 37 is moved off its seating so that the end of pipe 38 is opened to atmospheric air.

The pipe 38 incorporates a resonator R to produce an audible warning if air flows through the pipe 38 to the actuator device and thereby indicates a malfunctioning of the actuator device, as will hereinafter be described.

If the actuator device 30 is operating normally, when the electromagnetic control valve B is de-energized, the orifice 39 is blocked by the valve B under the action of the spring 9, and therefore no air flow takes place through the pipe 38 and resonator R and inflation of the bellows 23 is effected via the orifice 10 of the control valve B, which is then open, thus rapidly restoring the engine throttle or other speed control member to the closed or off position. However, if a fault occurs such that the electromagnetic control valve B does not operate to open the orifice 10 to atmosphere, then upon operation of the brake pedal 31, atmospheric air is fed via the valve 32,37 through the pipe 38 and resonator R to the orifice 39, which is now open, thereby allowing the bellows 23 to be inflated by the flow of air through the pipe 38 and so closing the engine throttle or its equivalent. The valve and flow passages are dimensioned

-8-

to permit air flow therethrough at a rate sufficient to cause the pressure in the interior of the bellows 23 rapidly to return to and remain at approximately atmospheric pressure irrespective of the position of the electromagnetic control valve C. This air flow through the resonator produces an audible warning signal indicating that a fault condition exists.

The electromagnetic control valve B may, for example, fail to open to atmosphere through its normal orifice 10 either due to the valve sticking with the orifice 10 closed, or due to an electrical fault such that the energizing coil of control valve B remains energized.

Fig. 2 shows one suitable form of resonator R, which may be made of a plastics material. As shown in Fig. 2, the resonator comprises two component parts 41,42 which are secured together. The part 41 includes a tubular inlet 41a which is connected to the auxiliary dump valve 32 by one section of pipe 38. The part 42 includes a tubular outlet 42a offset with respect to, and extending in the opposite direction to, inlet 41a. Another section of pipe 38 connects the outlet 42a to the orifice 39 of the actuator device.

In order that the vehicle should respond normally to all braking actions of the driver, the known speed-control system can be disengaged at any time by light pressure on the vehicle brake pedal, which operation actuates an electric switch which causes the electronic control circuit to de-energize the electromagnetic control valves B and C. Valve B, by opening its orifice 10, rapidly vents the bellows 23 which inflates to close the engine throttle.

It may be arranged that, in normal operation, the brake-operated dump valve 32 is phased to open shortly before the brake-operated disengagement switch operates to de-energize valve B and orifice 39 shuts. In this

-9-

case, an audible signal will occur for the short period during which the valve B commences to open its orifice 10. Thus, the occurrence of a short audible signal when the brake is operated indicates to the driver that the system is operating correctly.

Alternatively the phasing may be arranged, in normal operation, to allow valve B to shut orifice 39 before valve 32 opens, and in this case there will be no audible signal unless there is malfunctioning of valve B.

Since, in normal operation, both valve 32 and orifice 39 of valve B will only be open for very short periods of time, or not at all, as described above, there will not be a continuous stream of air through valve 32 and therefore the need to provide a filter to prevent entry of foreign matter into the actuator device is, in most cases, avoided.

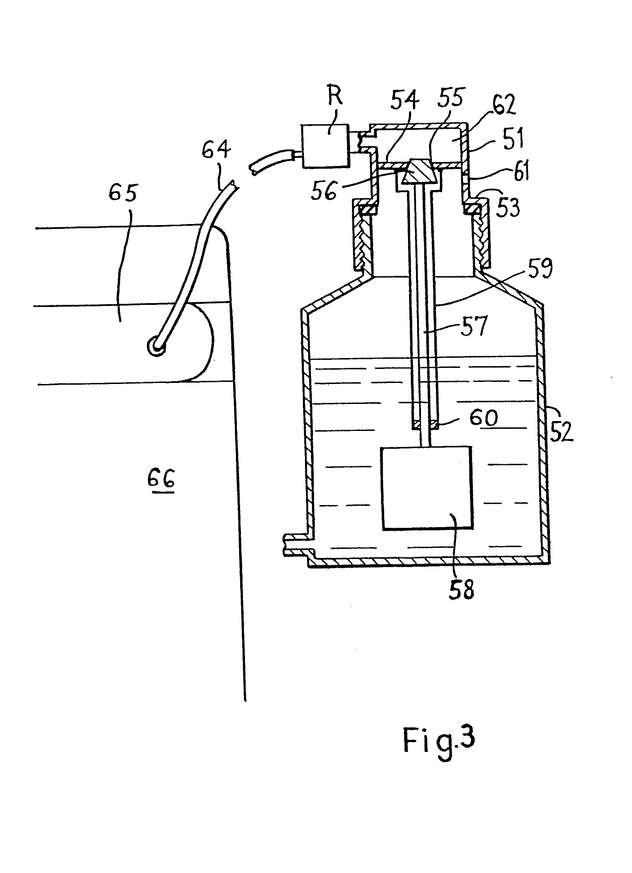

An embodiment of the invention for providing a warning signal in the event of a liquid falling below a predetermined level will now be described with reference to Fig. 3.

This embodiment specifically provides an audible warning in the event of brake fluid falling below a minimum safe level. A float valve assembly forms part of a cap 51 adapted to be screwed on to the neck of a brake fluid reservoir 52. The cap is provided with a shoulder formation 53 which abuts the top of the reservoir neck with the interposition of a washer. The cap is provided internally with a transverse wall 54 provided with a central aperture 55 forming a seat for a valve member 56 provided at the top of a rod 57, the bottom end of which is provided with a hollow float member 58. The valve member 56 is held captive to the wall 54 by a wire framework 59, which allows limited vertical movement of the valve member. The framework 59 supports at its lower end a ring 60 which surrounds and provides guiding support for the lower end of the rod 57.

-10-

A vent hole 61 is formed in the cap 51 between the wall 54 and the shoulder 53.

The chamber 62 formed in the cap above the wall 54 connects with the inlet of a resonator R, the outlet of which is connected by the pipe 64 to the intake manifold 65 of the vehicle engine 66.

When the reservoir 52 is filled with fluid the float 58 urges the valve member 56 upwardly to seal against its seat 55, thus preventing air, which can enter the reservoir through the vent hole 61, from being sucked into the chamber 62 and through the resonator R by the suction in the vehicle intake manifold. If, however, the brake fluid level should fall below a safe level, the float 58 and valve member 56 will become lowered, and the valve will open to allow air to be drawn through the resonator R to produce an audible warning signal.

In a modification the resonator may be connected to the vent hole 61 and the pipe 64 connected directly to the chamber 62.

-11-

CLAIMS

1.    A motor vehicle speed-control system for maintaining the vehicle speed substantially constant, comprising an electronic control circuit operable to sense the speed of the vehicle and produce a pulsed output of which the mark-to-space ratio of the pulses varies in dependence upon a comparison between the actual vehicle speed and a selected vehicle speed, an engine speed control adjustable by an actuator device including a chamber having a movable wall connected to said engine speed control, the chamber wall being movable by changing the pressure of the gas in the chamber under control of two electromagnetic valves, the first electromagnetic valve being energized by said electrical pulses to connect the chamber to first and second sources of gas pressure in accordance with the mark-to-space ratio of the pulses, and the second electromagnetic valve being spring biassed so that, when de-energized, its valve moves to a first position in which it opens a connection between the chamber and said first pressure source and, when energized, the valve moves to a second position in which it closes said connection, the actuator device adjusting the engine speed-control to reduce the engine speed as the gas pressure in the chamber approaches said first pressure, characterized by an auxiliary dump valve (32) which is normally closed and is opened by actuation of the vehicle brake pedal (31) or other driver-actuable member to connect said first pressure source to said chamber (D) through a further connection (39) which is closed by said second electromagnetic valve (B) when in its said first position and is opened when said second electromagnetic valve (B) is in its said second position, the gas flow between the chamber (D) and said first pressure source, when both the auxiliary dump valve (32) and said further connection (39) are open, being at a rate sufficient to cause the pressure in the chamber (D) rapidly to approximate to and to be maintained approximately at said first pressure irrespective of the action of said first electromagnetic valve (C) and in that a device (R) known _per se_, which produces an audible signal by a flow of gas therethrough, is connected to produce a signal when gas flows through both said dump valve (32) and said further connection (39).

2. A system according to claim 1, characterized in that actuation of the pedal (31) also actuates an electric switch to cause the electronic control circuit, in normal operation, to de-energize both said electromagnetic valves (B,C), and in that the auxiliary dump valve (32) is phased to open shortly before said second electromagnetic valve (B) upon being de-energized by actuation of said electric switch, closes said further connection (39), whereby to produce an audible signal of short duration when the system is operating normally and of prolonged duration if there is malfunctioning of the system.

3. An internal combustion engine or a vehicle driven thereby, in combination with means for producing an audible signal providing an indication of an operating condition of the engine or a part of the vehicle, characterized in that the audible signal is produced by a flow of gas through a device (R), known _per se_, having an inlet (41a) and an outlet (42a) for the flow of gas therethrough, said inlet and outlet being connected respectively to a first zone of gas at a first pressure and a second zone of gas at a lower pressure, the pressure at at least one of said pressure zones being created by the operation of the engine, and in that the gas flow path through said device from said first zone to said second zone includes valve means (32,56) which is normally closed and opens said gas flow path in response to the existence of said operating condition to be indicated.

4. The combination as claimed in claim 3, comprising

-13-

a vehicle having an automatic speed control system comprising a pneumatic actuator which adjusts the supply of fuel to the engine, and an electromagnetic valve arranged to vent the pneumatic actuator to atmosphere when the automatic speed control system is to be rendered inoperative, characterized by an auxiliary valve (32) which is opened upon actuation of a vehicle brake operating member (31) to connect the pneumatic actuator (30) to the atmosphere by way of a conduit (38) including said audible signal producing device (R) whereby to produce a gas flow through said device (R) in the event of the electromagnetic valve (B) failing to vent the pneumatic actuator to atmosphere.

5. The combination as claimed in claim 3, characterized in that said valve means (56) is actuated by a float (58) in a reservoir (52) containing a liquid used by the engine or vehicle and arranged to open the valve means (56) in the event of the liquid falling below a predetermined level.

6. The combination as claimed in claim 3, characterized in that said valve means is pressure-responsive and opens when the pressure to be indicated falls below a predetermined value.

7. The combination as claimed in claim 3, characterized in that said valve means is temperature-responsive and opens when the temperature to be indicated exceeds a predetermined value.

8. The combination as claimed in claim 3, comprising a vehicle having means for detecting the vehicle road speed, characterized in that said valve means is responsive to the detected road speed and opens when the road speed exceeds a predetermined speed.

9.    A motor vehicle speed-control system for maintaining the vehicle speed substantially constant, comprising an electronic control circuit operable to sense the speed of the vehicle and produce a pulsed output  of which the mark-to-space ratio of the pulses varies in dependence upon a comparison between the actual vehicle speed and a selected vehicle speed, an engine speed control adjustable by an actuator device including a chamber having a movable wall connected to said engine speed control, the chamber wall being movable by changing the pressure of the gas in the chamber under control of two electromagnetic valves, the first electromagnetic valve being energized by said electrical pulses to connect the chamber to first and second sources of gas pressure in accordance with the mark-to-space ratio of the pulses, and the second electromagnetic valve being spring biassed so that, when de-energized, its valve moves to a first position in which it opens a connection between the chamber and said first pressure source and, when energized, the valve moves to a second position in which it closes said connection, the actuator device adjusting the engine speed-control to reduce the engine speed as the gas pressure in the chamber approaches said first pressure, characterized by an auxiliary dump valve (32) which is normally closed and is opened by actuation of the vehicle brake pedal (31) or other driver-actuable member to connect said first pressure source to said chamber (D) through a further connection (39) which is closed by said second electromagnetic valve (B) when in its said first position and is opened when said second electromagnetic valve (B) is in its said second position, the gas flow between the chamber (D) and said first pressure source, when both the auxiliary dump valve (32) and said further connection (39) are open, being at a rate sufficient to cause the pressure in the chamber (D) rapidly to approximate to and to be maintained approximately at said first pressure irrespective of the action of said first electromagnetic valve (C).

Fig.1

Fig.2

Fig.3

European Patent
Office

**EUROPEAN SEARCH REPORT**

Application number

EP 80 30 1058

| | **DOCUMENTS CONSIDERED TO BE RELEVANT** | | CLASSIFICATION OF THE APPLICATION (Int. Cl. ⁴) |
|---|---|---|---|
| Category | Citation of document with indication, where appropriate, of relevant passages | Relevant to claim | B 60 K 31/00<br>G 05 D 13/04 |
| A | US - A - 4 072 207 (KOKUBO)<br>  * Figures 3,4; column 3, line 30 - column 4, line 25 * | 1 | |
| A,D | GB - A - 1 386 961 (ASSOCIATED EN-GINEERING LTD.)<br>  * Figures 1,4,5 * | 1 | |
| A | DE - A - 2 819 694 (ASSOCIATED EN-GINEERING LTD.)<br>  * Figure 1 * | 1 | |

TECHNICAL FIELDS
SEARCHED (Int.Cl. ³)

B 60 K
B 60 T
G 05 D

CATEGORY OF
CITED DOCUMENTS

X: particularly relevant

A: technological background

O: non-written disclosure

P: intermediate document

T: theory or principle underlying
the invention

E· conflicting application

D: document cited in the
application

L· citation for other reasons

&: member of the same patent
family,
corresponding document

| The present search report has been drawn up for all claims | | |
|---|---|---|
| Place of search<br>The Hague | Date of completion of the search<br>04-06-1980 | Examiner<br>ONILLON |

EPO Form 1503.1   06.78